# EUROPÄISCHE PATENTSCHRIFT

(11) **EP 1 317 985 B1**
(45) Veröffentlichungstag und Bekanntmachung des Hinweises auf die Patenterteilung: **30.05.2007**
(21) Anmeldenummer: 02024846.4
(22) Anmeldetag: 08.11.2002
(51) Int. Cl.: B23D 77/02

(54) **Werkzeug zur Feinstbearbeitung von Oberflächen**
Reamer
Alesoir

(30) Priorität: 04.12.2001 DE 10159431
(43) Veröffentlichungstag der Anmeldung: 11.06.2003
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- EP-A- 0 157 114
- DE-A- 3 909 643
- DE-C- 385 524
- US-A- 2 479 136

## Beschreibung

Die Erfindung betrifft ein Werkzeug zur Feinstbearbeitung von Oberflächen in Werkstücken, insbesondere von mehr oder weniger zylindrischen Ausnehmungen, wie beispielsweise Bohrungen (siehe z.B. DE-C-385524). Die Bearbeitung derartiger Oberflächen erfolgt in der Regel dadurch, dass das Werkzeug in Rotation versetzt und in die zu bearbeitende Öffnung in dem stillstehenden Werkstück eingefahren wird. Grundsätzlich ist es aber auch möglich, das Werkstück rotieren zu lassen, während das Werkzeug stillsteht. Relevant ist letztlich nur eine relative Dreh- und Vorschubbewegung zwischen Werkzeug und Werkstück. Im Folgenden wird vom Regelfall ausgegangen, bei dem das Werkzeug rotiert und das Werkstück stillsteht. Das Werkzeug weist geometrisch bestimmte Schneiden auf, die vorzugsweise an Messerplatten vorgesehen sind. Diese tragen bei der Bearbeitung der Oberflächen Späne vom Werkstück ab. Zur Erreichung sehr guter Oberflächengüten werden nach der spanenden Bearbeitung in der Regel zusätzliche Verfahren eingesetzt, beispielsweise Hohnen oder Rollieren, wodurch Oberflächen mit einem arithmetischen Mittelrauhwert von Rₐ= 0,1 µm erreicht werden. Durch die zusätzlichen Arbeitsschritte ist die Feinstbearbeitung von Oberflächen zeit- und kostenintensiv.

Aufgabe ist es daher, ein Werkzeug zu schaffen, mit dem sich auf zeit- und kostengünstige Weise feinstbearbeitete Oberflächen erzielen lassen.

Zur Lösung dieser Aufgabe wird ein Werkzeug vorgeschlagen, das die in Anspruch 1 genannten Merkmale aufweist. Es hat mindestens zwei Messerplatten, die jeweils wenigstens eine definierte, das heißt geometrisch bestimmte Schneide aufweisen. Das Werkzeug zeichnet sich dadurch aus, dass die Messerplatten zumindest im Bereich ihrer Schneiden unterschiedliche Werkstoffe aufweisen. Somit können die Werkstoffe der Messerplatten besonders gut auf die Bearbeitungsarten der Oberflächen des Werkstücks abgestimmt werden. Es ist damit möglich, einer Schneide eine Vorbearbeitung und der anderen eine Feinstbearbeitung zuzuordnen und die für die Schneiden beziehungsweise Messerplatten verwendeten Werkstoffe auf die Bearbeitungsweisen so abzustimmen, dass sich Oberflächen mit einer derart geringen Rauhigkeit ergeben, dass zusätzliche Bearbeitungsschritte entfallen können.

Bevorzugt wird ein Ausführungsbeispiel eines Werkzeugs, das sich dadurch auszeichnet, dass die der Vorbearbeitung dienende Messerplatte zumindest im Bereich ihrer Schneide Hartmetall, Cermet und/oder CBN (kubisches Bornitrid) aufweist und die der Feinstbearbeitung dienende Schneide beziehungsweise Messerplatte PKD (polykristalliner Diamant). Gerade diese Werkstoffkombination für die Messerplatten ergibt besonders gute Werte für die Oberflächenrauhigkeit.

Besonders bevorzugt wird ein Ausführungsbeispiel des Werkzeugs, das sich dadurch auszeichnet, dass der Radius des Flugkreises der der Feinstbearbeitung dienenden Messerplatte sich nur um wenige Mikrometer (µm) von dem Radius des Flugkreises der Messerplatte unterscheidet, die der Vorbearbeitung dient. Dadurch, dass die Messerplatte für die Feinstbearbeitung nur wenig über die der Vorbearbeitung vorspringt, ergibt sich eine sehr geringe Schnitttiefe und damit eine möglichst geringe Erwärmung der aktiven Schneide der Messerplatte, die der Fertig- beziehungsweise Feinstbearbeitung dient.

Bevorzugt wird außerdem ein Ausführungsbeispiel eines Werkzeugs, das mit einer Kühl- und/oder Schmiermittelversorgung versehen ist. Diese kann so ausgelegt werden, dass insbesondere die Messerplatte beziehungsweise Schneide, die PKD aufweist, besonders effektiv gekühlt wird. Damit ist es möglich, eine Temperatur im Bereich der PKD-Schneide von maximal 500° einzustellen, so dass sich selbst bei Einsatz von PKD bei der Bearbeitung von Guss-oder Stahlwerkstoffen eine lange Standzeit erzielen lässt, wobei eine hohe Oberflächengüte gewährleistet werden kann.

Die Erfindung wird im Folgenden anhand der Zeichnung näher erläutert. Es zeigen:
- Figur 1: eine Prinzipsskizze eines ersten Ausführungsbeispiels eines Werkzeugs in Draufsicht;
- Figur 2: eine Prinzipsskizze eines zweiten Ausführungsbeispiels in Draufsicht;
- Figur 3: eine Prinzipsskizze des Werkzeugs, bei der zwei Messerplatten und eine Führungsleiste etwa in eine Ebene projiziert sind;
- Figur 4: eine perspektivische Darstellung des in Figur 1 abgebildeten Werkzeugs 1; und
- Figuren 5A und 5B: jeweils eine weitere perspektivische Darstellung des in Figur 1 abgebildeten Werkzeugs.

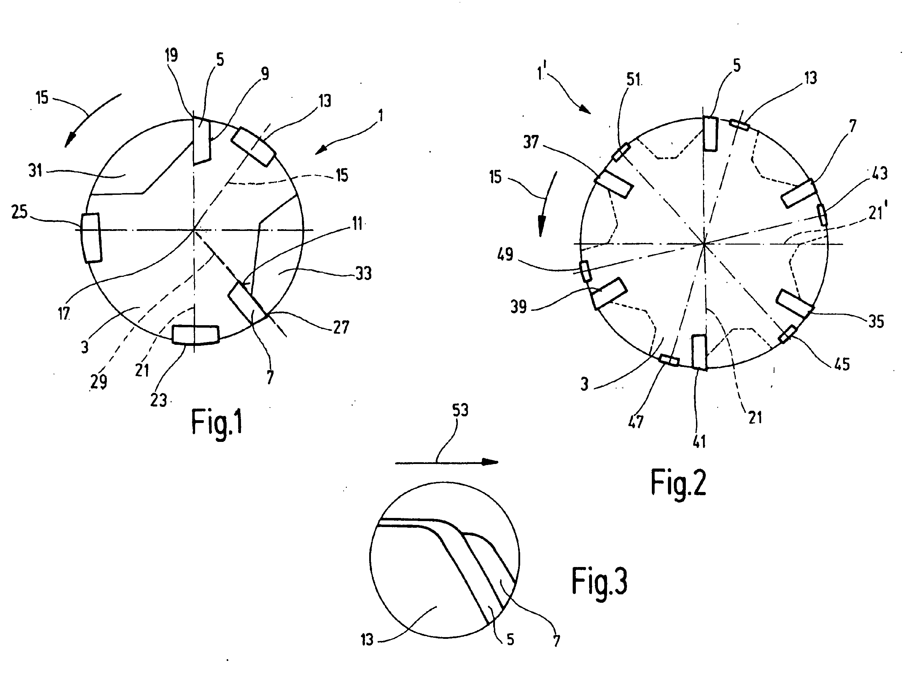

Das in Figur 1 dargestellte Werkzeug 1 ist als Zweischneider ausgelegt, es weist also zwei am Grundkörper 3 des Werkzeugs 1 befestigte Messerplatten 5 und 7 auf, die in geeignete Nuten 9 und 11 eingesetzt sind, welche in den Grundkörper 3 eingebracht sind. Die Messerplatten 5, 7 werden auf übliche Weise am Grundkörper 3 befestigt, in der Regel durch Spannpratzen. Denkbar ist es auch, sie unmittelbar mit Schrauben am Werkzeug 1 festzuspannen.

In den Grundkörper 3 ist außerdem mindestens eine Führungsleiste eingesetzt. Hier ist eine erste Führungsleiste 13 vorgesehen, die -in der durch einen Pfeil 15 angedeuteten Drehrichtung des Werkzeugs 1 gesehen- der ersten Messerplatte 5 um circa 40° nacheilt. Das heißt, eine durch die Mitte der Führungsleiste 13 radial verlaufende Linie 15, die die Mittel- beziehungsweise Drehachse 17 des Werkzeugs 1 schneidet, schließt mit einer durch die Schneide 19 der ersten Messerplatte 5 verlaufenden Durchmesserlinie 21 einen Winkel von circa 40° ein.

Gegenüberliegend der ersten Messerplatte 5 ist eine zweite Führungsleiste 23 vorgesehen. Schließlich ist eine dritte Führungsleiste 25 so in den Grundkörper 3 des Werkzeugs 1 eingesetzt, dass sie -in Drehrichtung 15 des Werkzeuges 1 gesehen- der ersten Messerplatte 5 um circa 90° voreilt.

Die zweite Messerplatte 7 ist so in den Grundkörper 3 des Werkzeugs 1 eingesetzt, dass sie -in Drehrichtung 15 des Werkzeugs 1 gesehen- der zweiten Führungsleiste 23 um circa 40° voreilt, das heißt, eine durch die Schneide 27 der zweiten Messerplatte 7 verlaufende Linie 29, die die Drehachse 17 schneidet, schließt mit der Durchmesserlinie 21 einen Winkel von circa 40° ein.

In Drehrichtung gesehen, ist vor jeder Messerplatte 5 und 7 eine Ausnehmung im Grundkörper 3 vorgesehen. Es handelt sich hier um den Schneiden 19, 27 zugeordnete übliche Spanräume 31 und 33, die die von den Schneiden 19 und 27 abgetragenen Späne des Werkstücks aufnehmen können.

Bei der Bearbeitung eines Werkstücks wird, wie oben dargelegt, das Werkzeug 1 zur Bearbeitung einer Oberfläche, insbesondere Bohrungsoberfläche, des Werkstücks in Rotation versetzt, so dass es sich, wie durch den Pfeil 15 angedeutet, entgegen dem Uhrzeigersinn dreht. Dann wird das Werkzeug 1 in die zu bearbeitende Bohrung eingeführt (Vorschubbewegung), so dass die Messerplatten 5 und 7 Späne von der Bohrungsoberfläche abtragen, während sich das Werkzeug 1 an der äußeren Umfangsfläche der Führungsleisten 13, 23 und 25 abstützt. Die Schneiden 19 und 27 der Messerplatten 5 und 7 liegen jeweils auf einem gedachten Kreis, dem sogenannten Flugkreis. Der Radius des Flugkreises der ersten Messerplatte 5 ist größer als der der zweiten Messerplatte 7. Nur die Schneide 19 (Fertigschneide) der Messerplatte 5 ragt über den Flugkreis der Au-ßenfläche der Führungsleisten 13, 23 und 25, die also gegenüber der Schneide 19 radial zurückversetzt sind.

Auf diese Weise wird sichergestellt, dass die zweite Messerplatte 7 der Grob-, das hießt Vorbearbeitung, der Werkstückoberfläche dient und die Schneide 19 der ersten Messerplatte 5 der Fertig-, das heißt der auch als Fertigbearbeitung bezeichneten Feinst-/Feinbearbeitung.

Die Messerplatten 5 und 7 sind gegeneinander so radial versetzt, dass die erste Messerplatte 5 der sogenannten Mikrozerspanung dient, also Späne mit einer Dicke von wenigen 1/100 mm abträgt.

Figur 2 zeigt ein weiteres Ausführungsbeispiel des Werkzeugs 1', das hier als Sechsschneider ausgelegt ist, also sechs Messerplatten aufweist, wodurch höhere Vorschubgeschwindigkeiten realisierbar sind. Die zweite Messerplatte 7 ist hier gemeinsam mit der ersten Messerplatte 5 im ersten Quadranten angeordnet, der durch die beiden Durchmesserlinien 21 und 21' gebildet wird, die senkrecht zueinander verlaufen. Im vierten Quadranten befindet sich unterhalb der zweiten Messerplatte 7 eine dritte Messerplatte 35, die, wie die erste Messerplatte 5, der Feinbearbeitung der Werkstückoberfläche dient. Gegenüber der dritten Messerplatte 35 befindet sich eine vierte Messerplatte 37, die der Vorbearbeitung dient. Gegenüber der zweiten Messerplatte 7 ist eine fünfte Messerplatte 39 in den Grundkörper 3 des Werkzeugs 1' eingesetzt, die der Vorbearbeitung dient. Schließlich ist gegenüberliegend der ersten Messerplatte 5 eine sechste Messerplatte 41 vorgesehen, die der Vorbearbeitung der Werkstückoberfläche dient.

Es zeigt sich also, dass das hier dargestellte Werkzeug 1' zwei Messerplatten (erste Messerplatte 5, dritte Messerplatte 35) aufweist, die der Feinbearbeitung dienen, während die übrigen Messerplatten (zweite Messerplatte 7, vierte Messerplatte 37, fünfte Messerplatte 39, sechste Messerplatte 41) der Vorbearbeitung der Werkstückoberfläche dienen.

Die vierte Messerplatte 37 eilt -in Drehrichtung des Werkzeugs 1' gesehen- der ersten Messerplatte 5 um circa 60°, die fünfte Messerplatte 39 um circa 120° vor, während die sechste Messerplatte 41 der ersten Messerplatte 5 um circa 180° voreilt. Die -in Drehrichtung des Werkzeugs 1' gesehen- um circa 60° der ersten Messerplatte 5 nacheilende zweite Messerplatte 7 eilt der dritten Messerplatte 35 um circa 60° vor.

Insgesamt weist das Werkzeug 1' also zwei Paare, bestehend aus je einer Messerplatte zur Fertigbearbeitung und zur Vorbearbeitung sowie ein Paar, bestehend aus zwei Messerplatten zur Vorbearbeitung, auf.

Es zeigt sich also, dass die Messerplatten jeweils paarweise einander gegenüberliegen.

Das Werkzeug 1' weist eine erste Führungsleiste 13 auf, die der ersten Messerplatte 5 um circa 20° nacheilt. Den weiteren Messerplatten sind jeweils Führungsleisten 43, 45, 47, 49, 51 zugeordnet, die den jeweiligen Messerplatten um circa 20° nacheilen.

Bei der Bearbeitung einer Werkstückoberfläche liegt das Werkzeug 1' einerseits mit den Messerplatten und andererseits mit den Führungsleisten an der Werkstückoberfläche an. Die Schneiden der Messerplatten liegen auf gedachten Kreislinien, den Flugkreisen. Dies gilt auch für die Oberflächen der Führungsleisten. Auch hier ist vorgesehen, dass die der Vorbearbeitung dienenden Messerplatten, also die zweite Messerplatte 7, die vierte Messerplatte 37, die fünfte Messerplatte 39 und die sechste Messerplatte 41, einen Flugkreis mit einem Radius aufweisen, der kleiner ist als der Radius des Flugkreises, auf dem die der Feinbearbeitung dienenden Messerplatten liegen, also die erste Messerplatte 5 und die dritte Messerplatte 35. Der Flugkreis der Führungsleisten 43 bis 41 ist größer als der der Messerplatten, die der Vorbearbeitung dienen.

Der sich ergebende radiale Überstand der der Feinbearbeitung dienenden Messerplatten über die der Vorbearbeitung dienenden Messerplatten ist hier wiederum sehr gering gewählt, so dass die der Feinbearbeitung dienenden Messerplatten sehr dünne Späne abtragen, deren Dicke wenige 1/100 mm beträgt, so dass auch hier eine Mikrozerspanung gegeben ist.

Figur 3 zeigt eine Prinzipsskizze, bei der beispielhaft die erste Messerplatte 5, die zweite Messerplatte 7 und die Führungsleiste 13 in eine Ebene verdreht sind. Aus dieser Darstellung lässt sich einerseits der bereits besprochene radiale Versatz der Messerplatten gegeneinander und gegenüber der Führungsleiste erkennen, außerdem die Tatsache, dass die hier genannten Elemente auch in Vorschubrichtung, also in Richtung der Drehachse 17 des Werkzeugs 1 beziehungsweise 1' gegeneinander versetzt sind.

Figur 3 lässt erkennen, dass die zweite Messerplatte 7, die der Vorbearbeitung dient, in Vorschubrichtung gesehen, also in Richtung des Pfeils 53, der ersten Messerplatte 5 und der Führungsleiste 13 voreilt. Figur 3 zeigt auch, dass die Führungsleiste 13 beiden Messerplatten 5 und 7 in Richtung des Pfeils 53 gesehen, nacheilt, also beim Einführen des Werkzeugs 1 beziehungsweise 1' als letztes mit der zu bearbeitenden Werkstückoberfläche in Eingriff tritt.

Figur 3 lässt auch erkennen, dass die der Vorbearbeitung dienende Messerplatte 7 in radialer Richtung gesehen, gegenüber der ersten Messerplatte 5 zurückspringt, die der Feinbearbeitung dient. Gegenüber dieser springt auch die Führungsleiste 13 etwas zurück, allerdings weniger als die zweite Messerplatte 7 und bildet so quasi den Außenumfang des Werkzeugs 1 beziehungsweise 1' -zumindest mit den übrigen Führungsleisten-. Bei dem in Figur 1 dargestellten Werkzeug 1 ist beispielhaft vorgesehen, dass die zweite Schneide 7 gegenüber der zugehörigen zweiten Führungsleiste 23 um etwa 12 µm bis 15 µm radial zurückspringt. Die erste Messerplatte 5 springt gegenüber der zugehörigen ersten Führungsleiste 13 um 9 µm bis 12 µm radial vor. Damit wird die oben angesprochene Mikrozerspanung insbesondere im Bereich der ersten Messerplatte 5 gewährleistet.

Für das in Figur 1 dargestellte Werkzeug 1 kann vorgesehen werden, dass die erste Schneide 19 gegenüber der zugehörigen Führungsleiste 13 -in Vorschubrichtung des Werkzeugs- um 0,20 mm bis 0,25 mm voreilt. Für die zweite Schneide ist vorzugsweise vorgesehen, dass diese der zugehörigen Führungsleiste um circa 0,50 mm in Vorschubrichtung, also in Richtung des Pfeils 53, voreilt.

Bei den Werkzeugen gemäß der Figuren 1 und 2 ist vorgesehen, dass die der Feinbearbeitung dienenden Messerplatten, also die erste Messerplatte 5 und die dritte Messerplatte 35, zumindest deren Schneiden, aus einem anderen Werkstoff bestehen, als die übrigen, der Vorbearbeitung dienenden Messerplatten beziehungsweise deren Schneiden. Der Vorbearbeitung dienen die zweite Messerplatte 7 in den Figuren 1 und 2, außerdem die in der Figur 2 dargestellten Messerplatten 37, 39 und 41, also die vierte, fünfte und sechste Messerplatte. Zur Vorbearbeitung werden Hartmetalle, Cermet, also ein Hartmetall, das vorwiegend aus Titancarbid oder aus Titannitrid oder aus beiden besteht, eingesetzt. In Frage kommt hier auch CBN. Für die Fertigbearbeitung wird PKD eingesetzt.

Durch die unterschiedliche Werkstoffwahl für die der Fein- und Vorbearbeitung dienenden Messerplatten beziehungsweise Schneiden ist es möglich, die Werkstoffe auf die jeweilige Bearbeitungsart und das Werkstückmaterial optimal abzustimmen. Daher kann auch eine hervorragende Oberflächengüte erreicht werden, ohne dass es zusätzlicher Bearbeitungsschritte bedürfte.

Die hier gewählte Werkstoffwahl hat sich besonders bei der Bearbeitung von Werkstücken aus Gusswerkstoffen, insbesondere aus Grauguss und/oder aus Stahl bewährt.

Dass hier anhand der Figuren 1 und 2 erläuterte Werkzeug zeichnet sich durch eine hier nicht dargestellte Kühl- und/oder Schmiermittelversorgung aus. Diese dient dazu, die Reibung des Werkzeugs innerhalb der bearbeiteten Bohrung zu reduzieren, aber auch dazu, die aktiven Schneiden der Messerplatten, also die mit der Werkstückoberfläche in Eingriff tretenden Schneiden, zu kühlen. Die Kühl- und/oder Schmiermittelversorgung wird so ausgelegt, dass insbesondere die aktive Schneide aus PKD so intensiv gekühlt wird, dass deren Temperatur möglichst unterhalb von 600°C liegt, da ab circa 600°C an der PKD-Schneide eine Auflösung beziehungsweise Gefügeumwandlung des Kohlenstoffs stattfindet. Bei der sogenannten "Graphitisierung" wird die Struktur des Diamants in eine Graphit-Struktur umgewandelt, was bezüglich der Stabilität der Schneidkante sehr negative Auswirkungen hat. Bewährt hat sich eine Kühlung, die so effektiv ist, dass sie eine Temperatur von 400°C bis 600°C, insbesondere von circa 450°C bis 550°C einstellt. Besonders bevorzugt wird eine Auslegung der Kühlung dergestalt, dass die aus PKD bestehenden aktive(n) Schneide(n) maximal eine Arbeitstemperatur von 500°C erreichen. Aufgrund dieser Auslegung der Kühl- und/oder Schmiermittelzufuhr ist es möglich, PKD-Schneiden beziehungsweise PKD-Messerplatten, die üblicherweise zur Zerspanung von Aluminium und Buntmetallen verwendet werden, zur Zerspanung von Guss und/oder Stahl einzusetzen.

Entscheidend ist also, dass bei der Bearbeitung des Werkstücks, auch wenn dieses aus Guss und/oder Stahl besteht, die Temperatur im Bereich der aktiven Schneide, die aus PKD besteht, auf vorzugsweise maximal 500°C begrenzt wird. Dies kann einerseits durch eine entsprechend angepasste Vorschub- und Drehgeschwindigkeit des Werkzeugs, andererseits durch eine entsprechende Kühlung erreicht werden. Dazu kann auch ein Kühlmittelstrahl unmittelbar auf die der Feinbearbeitung dienende Schneide und/oder auf den Bereich vor der Schneide aus PKD gerichtet werden. Eine übermäßige Erwärmung im Bereich der PKD-Schneide wird auch dadurch vermieden, dass diese mit einer sehr geringen Schnitttiefe von wenigen 1/100 mm arbeitet, also lediglich für eine Mikrozerspanung verwendet wird. Auch dies führt dazu, dass die Temperatur nicht übermäßig ansteigt.

Letztlich zeigt sich, dass bei Einsatz dieses Werkzeugs PKD sehr gut als Schneiden- beziehungsweise Messerplattenmaterial geeignet ist und eine Oberflächengüten von Rₐ= 0,10 µm erreichbar ist. Durch die geringe Schneidentemperatur, die hier sichergestellt wird, ist überdies eine relativ lange Standzeit des Werkzeugs zu erreichen. Dies ergibt sich dadurch, dass der Verschleiß an der PKD-Schneide besonders niedrig ist.

Anhand der Figuren wurden Zwei- und Sechsschneiden-Werkzeuge erläutert. Es ist aber auch möglich, Werkzeuge mit beispielsweise vier Schneiden zu realisieren, von denen drei der Vorbearbeitung und eine der Feinbearbeitung dient. Wesentlicher Gesichtspunkt ist, dass bei den Werkzeugen der hier angesprochenen Art unabhängig von der Schneidenzahl die Vorbearbeitung, also die Grobzerspanung, mit Hartmetall und dergleichen durchgeführt wird, währen die Feinst- beziehungsweise Feinbearbeitung mit mindestens einer PKD-Schneide durchgeführt wird. Durch die Mikrozerspanung und die besondere Kühlung wird sichergestellt, dass die PKD-Schneide(n) nicht so stark erwärmt wird/werden, dass das PKD in Kohlenstoff übergeht.

Es sei hier noch darauf hingewiesen, dass die hier beschriebenen Messerplatten alle als Wendeplatten ausgebildet werden können, damit also mehr als eine Schneide aufweisen. Es ist damit möglich, nach Verschleiß der einen Schneide, die Wendeplatte so zu drehen, dass eine weitere Schneide mit der zu bearbeitenden Werkstückoberfläche in Eingriff gebracht werden kann.

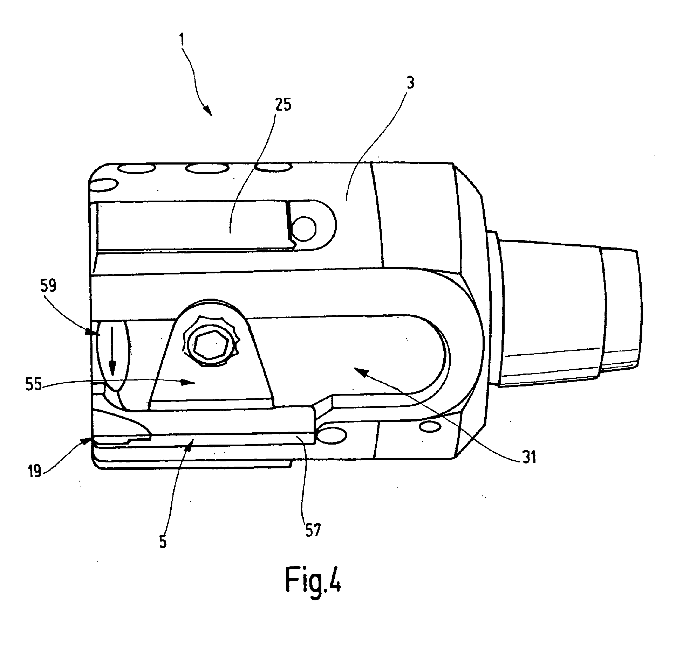

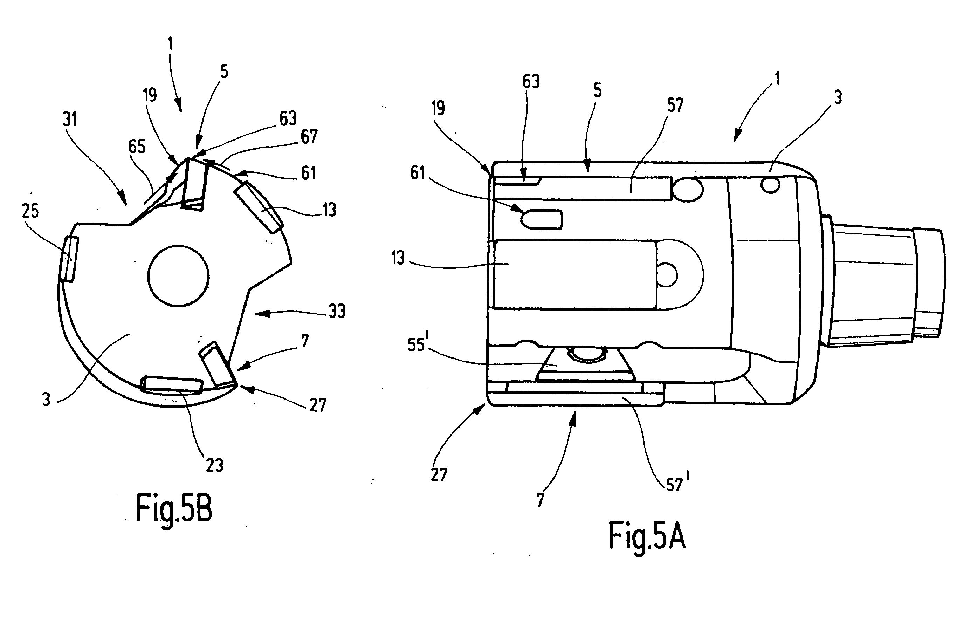

Im Folgenden wird anhand der Figuren 4, 5A sowie 5B, die jeweils eine perspektivische Darstellung des in Figur 1 dargestellten Ausführungsbeispiels des Werkzeugs 1 zeigen, die vorstehend beschriebene Kühl- und/oder Schmiermittelversorgung näher erläutert. Teile, die bereits anhand der vorangegangenen Figuren beschrieben sind, wurden mit gleichen Bezugszeichen versehen, so dass insofern auf die Beschreibung zu den Figuren 1 bis 3 verwiesen wird.

In der Darstellung gemäß Figur 4 ist die erste Messerplatte 5 zu erkennen, die durch eine an sich bekannte Spannpratze 55 am Grundkörper 3 gehalten ist. Die erste Messerplatte 5 umfasst bei diesem Ausführungsbeispiel einen Schneidengrundkörper 57 mit einer aus PKD bestehenden Schneide 19. Die Spannpratze 55 wirkt mit dem Schneidengrundkörper 57 zusammen.

In Figur 4 ist ferner eine erste Kühl- und/oder Schmiermittelaustrittsöffnung 59 zu erkennen, die mit einem unter Druck stehenden Kühl- und/oder Schmiermittel beaufschlagbar ist. Die erste Austrittsöffnung 59 ist derart am Grundkörper 3 angeordnet und entsprechend ausgebildet, dass der aus der ersten Austrittsöffnung 59 austretende Kühl-/Schmiermittelstrahl (nicht dargestellt) direkt auf die PKD-Schneide 19 der ersten Messerplatte 5 trifft. Dadurch kann eine intensive Kühlung der aktiven PKD-Schneide 19 gewährleistet werden. Der aus der ersten Austrittsöffnung 59 austretende Kühl-/Schmiermittelstrahl besitzt bei diesem Ausführungsbeispiel praktisch keine in oder entgegen der Vorschubbewegung verlaufende Richtungskomponente. Aufgrund der vorstehend beschriebenen Ausgestaltung und Anordnung der ersten Austrittsöffnung 59 wird vor allem die Haupt- und Nebenschneide auf der Spanfläche und an der Schneidkante gekühlt, weniger an den Freiflächen der Schneide 19. Um auch dort eine effektive Kühlung zu erzielen, kann -wie in Figur 5A erkennbar- eine weitere, zweite Kühl- und/oder Schmiermittelaustrittsöffnung 61 -in Drehrichtung des Werkzeugs 1 gesehen- direkt hinter der Schneide 19 in das. Werkzeug 1 vorgesehen werden. Die zweite Kühl-/Schmiermittelaustrittsöffnung 61 ist also zwischen der ersten Messerplatte 5 und der nachfolgenden Führungsleiste 13 angeordnet. Die zweite Austrittsöffnung 61 ist derart ausgebildet und angeordnet, dass der daraus austretende Kühl-/Schmiermittelstrahl so gerichtet ist, dass die Freiflächen 63 der Schneide 19 der ersten Messerplatte 5 angeströmt werden. Die Führungsleiste 13, die Freiflächen 63, die Bohrungsoberfläche und Teile der Oberfläche des Werkzeugs 1 bilden -wenn sich das Werkzeug 1 in der Bohrung befindet- einen Kanal, der durch die Austrittsöffnung 61 mit dem Kühl-/Schmiermittel beaufschlagbar ist. Somit kann das eingesetzte Kühl-/Schmiermittel nur in axialer Richtung des Werkzeugs 1 entweichen, was ebenfalls eine optimale Umströmung und damit Kühlung der Freiflächen 63 der Schneide 19 bewirkt. In Drehrichtung 15 gesehen, wird das Kühl-/Schmiermittel quasi von der Führungsleiste 13 in Richtung der Schneide 19 geschoben.

Festzuhalten bleibt noch, dass in der Darstellung gemäß der Figur 5B, die eine Vorderansicht auf das Werkzeug 1 zeigt, die erste Messerplatte 5 beziehungsweise die Schneide 19 von zwei Seiten mit dem Kühl-/Schmiermittel beaufschlagt wird, wobei der aus der ersten Austrittsöffnung 59 austretende Kühl-/Schmiermittelstrahl (Pfeil 65) im Wesentlichen entgegen der Drehrichtung 15 des Werkzeugs 1 und der aus der zweiten Austrittsöffnung 61 ausgespritzte Kühl-/Schmiermittelstrahl (Pfeil 67) im Wesentlichen in Drehrichtung 15 gerichtet ist.

Um eine ausreichende Kühlung beziehungsweise Schmierung der Schneide 19 der Messerplatte 5 gewährleisten zu können, damit die PKD-Schneide 19 vorzugsweise nicht über 500°C erwärmt wird, kann die erste Austrittsöffnung 59 oder die zweite Austrittsöffnung 61 ausreichend sein. Selbstverständlich ist es ohne weiteres möglich, dass der ersten Messerplatte 5 beziehungsweise der Schneide 19 auch mehr als zwei Austrittsöffnungen für das Kühl- und/oder Schmiermittel zugeordnet sind. Nach einer weiteren, in den Figuren nicht dargestellten Ausführungsvariante ist vorgesehen, dass auch der zweiten Messerplatte 7 mindestens eine Aüstrittsöffnung für das Kühl- und/oder Schmiermittel zugeordnet ist. Im Übrigen ist es möglich, insbesondere die der Feinbearbeitung dienenden Messerplatten 5 und 35, aber auch die übrigen Messerplatten, beziehungsweise die Schneiden der genannten Messerplatten, mit mindestens einem, vorzugsweise zwei Kühl- und/oder Schmiermittelstrahlen zu beaufschlagen.

Wie in Figur 5A angedeutet, weist auch die zweite Messerplatte 7 einen Schneidengrundkörper 57' auf und ist mittels einer Spannpratze 55' im Grundkörper 3 des Werkzeugs 1 gehalten. Die Schneide 27 der zweiten Messerplatte 7 ist hier einstückig mit dem Schneidengrundkörper 57' ausgebildet, das heißt, die Schneide 27 ist aus dem aus vorzugsweise Hartmetall, Cermet und/oder CBN bestehenden Schneidengrundkörper 57' herausgearbeitet, beispielsweise herausgeschliffen. Selbstverständlich ist es möglich, dass die Schneide 27 aus einem anderen Material besteht als der Schneidengrundkörper 57' und in geeigneter Weise an diesem befestigt ist.

## Patentansprüche

1. Werkzeug zur Feinstbearbeitung von Oberflächen von Werkstücken, mit mindestens zwei wenigstens eine definierte Schneide aufweisenden Messerplatten, **dadurch gekennzeichnet, dass** die Messerplatten (5,7;35,37,39,41) zumindest im Bereich der mindestens einen Schneide unterschiedliche Werkstoffe aufweisen, wobei der Schneide einer ersten Messerplatte ein erster Werkstoff und der Schneide einer zweiten Messerplatte ein zweiter Werkstoff zugeordnet ist.

2. Werkzeug nach Anspruch 1, **dadurch gekennzeichnet, dass** eine Messerplatte (5) so anordenbar ist, dass sie weiter über die Umfangsfläche des Werkzeugs hinausragt als die andere, und/oder dass die Messerplatten -in Längsrichtung des Werkzeuges gesehen- zueinander versetzt anordenbar sind.

3. Werkzeug nach Anspruch 1 oder 2, **dadurch gekennzeichnet, dass** die erste Messerplatte (5), die weiter über die Umfangsfläche des Werkzeugs (1;1') hinausragt als die zweite Messerplatte (7), zumindest im Bereich der mindestens einen Schneide PKD aufweist und der Fertigbearbeitung dient.

4. Werkzeug nach einem der vorhergehenden Ansprüche, **dadurch gekennzeichnet, dass** die zweite Messerplatte (7), die weniger weit über die Umfangsfläche des Werkzeugs (1,1') hinausragt als die erste Messerplatte (5), zumindest im Bereich der mindestens einen Schneide Hartmetall, Cermet und/oder CBN aufweist und der Vorbearbeitung dient.

5. Werkzeug nach einem der vorhergehenden Ansprüche, **dadurch gekennzeichnet, dass** die erste Messerplatte (5) der zweiten Messerplatte (7) -in Vorschubrichtung des Werkzeugs gesehen- nacheilt.

6. Werkzeug nach einem der vorhergehenden Ansprüche, **dadurch gekennzeichnet, dass** mindestens eine Führungsleiste (13,23,25) vorgesehen ist.

7. Werkzeug nach einem der vorhergehenden Ansprüche, **dadurch gekennzeichnet, dass** die mindestens eine Führungsleiste -in Vorschubrichtung des Werkzeugs gesehen- der ersten und/oder zweiten Messerplatte nacheilt.

8. Werkzeug nach einem der vorhergehenden Ansprüche, **dadurch gekennzeichnet, dass** das Werkzeug (1) als Zweischneider ausgebildet ist und dass der ersten Messerplatte (5) eine erste Führungsleiste (13) -in Drehrichtung des Werkzeugs gesehen- um circa 40° nacheilt.

9. Werkzeug nach einem der vorhergehenden Ansprüche, **dadurch gekennzeichnet, dass** der ersten Messerplatte (5) eine zweite Führungsleiste (23) gegenüberliegt.

10. Werkzeug nach einem der vorhergehenden Ansprüche, **dadurch gekennzeichnet, dass** der ersten Messerplatte (5) eine dritte Führungsleiste (25) -in Vorschubrichtung des Werkzeugs gesehen- um circa 90° voreilt.

11. Werkzeug nach einem der vorhergehenden Ansprüche, **dadurch gekennzeichnet, dass** die zweite Messerplatte (7) der ersten Messerplatte (5) -in Drehrichtung des Werkzeugs gesehen- um circa 220° voreilt.

12. Werkzeug nach einem der Ansprüche 1 bis 7, **dadurch gekennzeichnet, dass** das Werkzeug (1') als Sechsschneider ausgebildet ist.

13. Werkzeug nach Anspruch 12, **dadurch gekennzeichnet, dass** das Werkzeug (1') vier der Vorbearbeitung und zwei der Fertigbearbeitung dienende Messerplatten aufweist.

14. Werkzeug nach Anspruch 12 oder 13, **dadurch gekennzeichnet, dass** der zweiten Messerplatte (7), die der Vorbearbeitung dient, eine der Fertigbearbeitung dienende erste Messerplatte (5) -in Drehrichtung des Werkzeugs gesehen- um circa 60° voreilt.

15. Werkzeug nach einem der Ansprüche 11 bis 14, **dadurch gekennzeichnet, dass** eine weitere, der Fertigbearbeitung dienende dritte Messerplatte (35) vorgesehen ist.

16. Werkzeug nach einem der Ansprüche 11 bis 15, **dadurch gekennzeichnet, dass** der ersten Messerplatte (5) mindestens eine, vorzugsweise drei der Vorbearbeitung dienende Messerplatten -in Drehrichtung des Werkzeugs gesehen- voreilen.

17. Werkzeug nach einem der Ansprüche 11 bis 16, **dadurch gekennzeichnet, dass** der ersten Messerplatte (5) eine der Vorbearbeitung dienende vierte Messerplatte (37) -in Drehrichtung des Werkzeugs (1) gesehen- um circa 60° voreilt.

18. Werkzeug nach einem der Ansprüche 11 bis 17, **dadurch gekennzeichnet, dass** der ersten Messerplatte (5) eine der Vorbearbeitung dienende fünfte Messerplatte (39) -in Drehrichtung des Werkzeugs gesehen- um circa 120° voreilt.

19. Werkzeug nach einem der Ansprüche 11 bis 18, **dadurch gekennzeichnet, dass** der ersten Messerplatte (5) eine der Vorbearbeitung dienende sechste Messerplatte (41) gegenüberliegt.

20. Werkzeug nach einem der vorhergehenden Ansprüche 1 bis 19, **dadurch gekennzeichnet, dass** die Messerplatten paarweise gegenüberliegend anordenbar sind.

21. Werkzeug nach einem der Ansprüche 1 bis 20, **dadurch gekennzeichnet, dass** mindestens einer der Messerplatte eine Führungsleiste zugeordnet ist.

22. Werkzeug nach einem der vorhergehenden Ansprüche 11 bis 21, **dadurch gekennzeichnet, dass** die Führungsleiste der zugehörigen Messerplatte -in Drehrichtung des Werkzeugs gesehen- um circa 20° nacheilt.

23. Werkzeug nach einem der vorhergehenden Ansprüche 11 bis 22, **dadurch gekennzeichnet, dass** jeder Messerplatte eine Führungsleiste zugeordnet ist.

24. Werkzeug nach einem der vorhergehenden Ansprüche 11 bis 23, **dadurch gekennzeichnet, dass** die Führungsleisten paarweise gegenüberliegend angeordnet sind.

25. Werkzeug nach einem der vorhergehenden Ansprüche, **dadurch gekennzeichnet, dass** die erste Messerplatte (5) der zugehörigen Führungsleiste (13) um circa 0,20 mm bis 0,25 mm -in Vorschubrichtung des Werkzeugs gesehen- voreilt.

26. Werkzeug nach einem der vorhergehenden Ansprüche, **dadurch gekennzeichnet, dass** die zweite Schneide (27) der zugehörigen Führungsleiste um circa 0,50 mm -in Vorschubrichtung des Werkzeugs gesehen- voreilt.

27. Werkzeug nach einem der vorhergehenden Ansprüche, **dadurch gekennzeichnet, dass** die zweite Messerplatte (7) in radialer Richtung um 12 µm bis 15 µm unter die Oberfläche der zugehörigen Führungsleiste ragt.

28. Werkzeug nach einem der vorhergehenden Ansprüche, **dadurch gekennzeichnet, dass** die erste Messerplatte (5) um 9 µm bis 12 µm über die äußere Oberfläche der zugehörigen Führungsleiste (13) ragt.

29. Werkzeug nach einem der vorhergehenden Ansprüche, **dadurch gekennzeichnet, dass** eine Kühl- und/oder Schmiermittelversorgung vorgesehen ist.

30. Werkzeug nach einem der vorhergehenden Ansprüche, **dadurch gekennzeichnet, dass** die Kühlung zumindest der der Feinbearbeitung dienenden Messerplatten so auslegbar ist, dass diese, insbesondere deren aktive Schneiden, bei der Bearbeitung von Werkstückoberflächen eine Temperatur annehmen, die unter 600°C, vorzugsweise im Bereich von 400°C bis 600°C, insbesondere von circa 450°C bis 550°C liegt.

31. Werkzeug nach Anspruch 29, **dadurch gekennzeichnet, dass** die Kühlung so auslegbar ist, dass die Temperatur der Messerplatte beziehungsweise zumindest deren aktive Schneide etwa im Bereich von maximal 500°C liegt.

32. Verwendung eines Werkzeugs nach einem der Ansprüche 1 bis 31 zur Bearbeitung von Werkstücken aus Gusswerkstoffen, insbesondere aus Grauguss und/oder Stahl.

## Claims

1. A tool for the fine machining of surfaces of workpieces, having at least two cutter tips including at least one defined cutting edge, **characterized in that** the cutter tips (5, 7; 35, 37, 39, 41) include at least in the region of the at least one cutting edge different materials, with a first material being assigned to the cutting edge of a first cutter tip and a second material being assigned to the cutting edge of a second cutter tip.

2. A tool according to claim 1, **characterized in that** a cutter tip (5) is arrangeable such that it projects further beyond the peripheral surface of the tool than the other one, and/or that, seen in a longitudinal direction of the tool, the cutter tips are arrangeable offset with respect to one another.

3. A tool according to claim 1 or 2, **characterized in that** the first cutter tip (5) projecting further beyond the peripheral surface of the tool (1, 1') than the second cutter tip (7) includes PCD, at least in the region of the at least one cutting edge, and serves for finish-machining.

4. A tool according to any one of the preceding claims, **characterized in that** the second cutter tip (7) projecting less beyond the peripheral surface of the tool (1, 1') than the first cutter tip (5) includes, at least in the region of the at least one cutting edge, carbide, cermet and/or CBN and serves for premachining.

5. A tool according to any one of the preceding claims, **characterized in that**, seen in feed direction of the tool, the first cutter tip (5) follows the second cutter tip (7).

6. A tool according to any one of the preceding claims, **characterized in that** at least one guide bar (13, 23, 25) is provided.

7. A tool according to any one of the preceding claims, **characterized in that**, seen in feed direction of the tool, the at least one guide bar follows the first and/or second cutter tip.

8. A tool according to any one of the preceding claims, **characterized in that** the tool (1) is provided with two cutting edges, and that, seen in a rotational direction of the tool, a first guide bar (13) follows the first cutter tip (5) in a distance of about 40°.

9. A tool according to any one of the preceding claims, **characterized in that** a second guide bar (23) is located opposite the first cutter tip (5).

10. A tool according to any one of the preceding claims, **characterized in that**, seen in feed direction of the tool, a third guide plate (25) precedes the first cutter tip (5) with an advance of about 90°.

11. A tool according to any one of the preceding claims, **characterized in that**, seen in a rotational direction of the tool, the second cutter tip (7) precedes the first cutter tip (5) with an advance of about 220°.

12. A tool according to any one of claims 1 to 7, **characterized in that** the, tool (1') is provided with six cutting edges.

13. A tool according to claim 12, **characterized in that** the tool (1') includes four cutter tips serving for premachining and two cutter tips serving for finish-machining.

14. A tool according to claim 12 or 13, **characterized in that**, seen in a rotational direction of the tool, a first cutter tip (5) serving for finish-machining precedes the second cutter tip (7) serving for premachining with an advance of about 60°.

15. A tool according to any one of claims 11 to 14, **characterized in that** a further cutter tip is provided, said third cutter tip (35) serving for finish-machining.

16. A tool according to any one of claims 11 to 15, **characterized in that**, seen in a rotational direction of the tool, at least one, preferably three cutter tips serving for premachining precede the first cutter tip (5).

17. A tool according to any one of claims 11 to 16, **characterized in that**, seen in a rotational direction of the tool (1), a forth cutter tip (37) serving for premachining precedes the first cutter tip (5) with an advance of about 60°.

18. A tool according to any one of claims 11 to 17, **characterized in that**, seen in a rotational direction of the tool, a fifth cutter tip (39) serving for premachining precedes the first cutter tip (5) with an advance of about 120°.

19. A tool according to any one of claims 11 to 18, **characterized in that** a sixth cutter tip (41) serving for premachining is located opposite the first cutter tip (5).

20. A tool according to any one of claims 1 to 19, **characterized in that** the cutter tips are arrangeable in pairs, opposite one another.

21. A tool according to any one of claims 1 to 20, **characterized in that** a guide bar is assigned to at least one of the cutter tips.

22. A tool according to any one of claims 11 to 21, **characterized in that**, seen in a rotational direction of the tool, the guide bar follows its corresponding cutter tip in a distance of about 20°.

23. A tool according to any one of claims 11 to 22, **characterized in that** a guide bar is assigned to each cutter tip.

24. A tool according to any one of the preceding claims 11 to 23, **characterized in that** the guide bars are arranged in pairs, opposite one another.

25. A tool according to any one of the preceding claims, **characterized in that**, seen in feed direction of the tool, the first cutter tip (5) precedes its corresponding guide bar (13) with an advance of about 0.20 mm to 0.25 mm.

26. A tool according to any one of the preceding claims, **characterized in that**, seen in feed direction of the tool, the second cutting edge (27) precedes its corresponding guide bar with an advance of about 0.50 mm.

27. A tool according to any one of the preceding claims, **characterized in that** the second cutter tip (7) projects by about 12 µm to 15 µm below the top surface of the corresponding guide bar in a radial direction.

28. A tool according to any one of the preceding claims, **characterized in that** the first cutter tip (5) projects by about 9 µm to 12 µm above the outer surface of the corresponding guide bar (13).

29. A tool according to any one of the preceding claims, **characterized in that** a supply of coolants and/or lubricants is provided.

30. A tool according to any one of the preceding claims, **characterized in that at** least the cooling of the cutter tips serving for fine machining may be designed such that said cutter tips, in particular the active cutting edges thereof, reach a temperature during the machining of surfaces of workpieces which is below 600°C, preferably in the range from 400°C to 600°C, particularly from about 450°C to 550°C.

31. A tool according to claim 29, **characterized in that** the cooling may be designed such that the temperature of the cutter tip and at least of the active cutting edge thereof, respectively, is approximately in the range of not more than 500°C.

32. The utilization of a tool according to any one of claims 1 to 31 for the machining of workpieces made of cast material, particularly gray cast iron and/or steel.

## Revendications

1. Un outil pour le traitement haute précision de surfaces de pièces à usiner avec au moins deux plaquettes de coupe comprenant au moins un tranchant défini, **caractérisé en ce que** lesdites plaquettes de coupes (5, 7; 35, 37, 39, 41) comprennent au moins dans la région dudit au moins un tranchant des matériaux différents, avec un premier matériau étant associé au tranchant d'une première plaquette de coupe, et un deuxième matériau étant associé au tranchant d'une deuxième plaquette de coupe.

2. Un outil selon la revendication 1, **caractérisé en ce qu'**une plaquette de coupe (5) peut être positionnée de telle manière qu'elle dépasse plus de la surface périphérique de l'outil que l'autre, et/ou que, si l'on regarde dans la direction longitudinale de l'outil, les plaquettes de coupe peuvent être positionnées en décalage l'un par rapport à l'autre.

3. Un outil selon la revendication 1 ou 2, **caractérisé en ce que** la première plaquette de coupe (5) qui dépasse plus de la surface périphérique de l'outil (1 ; 1') que la deuxième plaquette de coupe (7) comporte, au moins dans la région dudit au moins un tranchant, du diamant polycristallin, et sert au finissage.

4. Un outil selon l'une des revendications précédentes, **caractérisé en ce que** la deuxième plaquette de coupe (7) qui dépasse moins de la surface périphérique de l'outil (1, 1') que la première plaquette de coupe (5) comporte, au moins dans la région dudit au moins un tranchant, du métal dur, du cermet et/ou du CBN, et sert au préusinage.

5. Un outil selon l'une des revendications précédentes, **caractérisé en ce que,** si l'on regarde dans la direction d'avance de l'outil, la première plaquette de coupe (5) suit la deuxième plaquette de coupe (7).

6. Un outil selon l'une des revendications précédentes, **caractérisé en ce qu'**au moins une barre de guidage (13, 23, 25) est prévue.

7. Un outil selon l'une des revendications précédentes, **caractérisé en ce que**, si l'on regarde dans la direction d'avance de l'outil, ladite au moins une barre de guidage suit la première et/ou la deuxième plaquette de coupe.

8. Un outil selon l'une des revendications précédentes, **caractérisé en ce que** l'outil (1) est à deux tranchants et que, si l'on regarde dans la direction de rotation de l'outil, une première barre de guidage (13) suit la première plaquette de coupe (5) avec un retard d'environ 40°.

9. Un outil selon l'une des revendications précédentes, **caractérisé en ce qu'**une deuxième barre de guidage (23) se trouve en face de la première plaquette de coupe (5).

10. Un outil selon l'une des revendications précédentes, **caractérisé en ce que**, si l'on regarde dans la direction d'avance de l'outil, une troisième barre de guidage (25) précède la première plaquette de coupe (5) avec une avance d'environ 90°.

11. Un outil selon l'une des revendications précédentes, **caractérisé en ce que**, si l'on regarde dans la direction de rotation de l'outil, la deuxième plaquette de coupe (7) précède la première plaquette de coupe (5) avec une avance d'environ 220°.

12. Un outil selon l'une des revendications 1 à 7, **caractérisé en ce que** l'outil (1') est à six tranchants.

13. Un outil selon la revendication 12, **caractérisé en ce que** l'outil (1') comporte quatre plaquettes de coupe servant au préusinage et deux plaquettes de coupe servant au finissage.

14. Un outil selon la revendication 12 ou 13, **caractérisé en ce que**, si l'on regarde dans la direction de rotation de l'outil, une première plaquette de coupe (5) servant au finissage précède la deuxième plaquette de coupe (7) servant au préusinage avec une avance d'environ 60°.

15. Un outil selon l'une des revendications 11 à 14, **caractérisé en ce qu'**une troisième plaquette de coupe (35) est prévue qui sert également au finissage.

16. Un outil selon l'une des revendications 11 à 15, **caractérisé en ce que**, si l'on regarde dans la direction de rotation de l'outil, au moins une, mais de préférence trois plaquettes de coupe servant au préusinage précèdent la première plaquette de coupe (5).

17. Un outil selon l'une des revendications 11 à 16, **caractérisé en ce que**, si l'on regarde dans la direction de rotation de l'outil (1), une quatrième plaquette de coupe (37) servant au préusinage précède la première plaquette de coupe (5) avec une avance d'environ 60°.

18. Un outil selon l'une des revendications 11 à 17, **caractérisé en ce que**, si l'on regarde dans la direction de rotation de l'outil, une cinquième plaquette de coupe (39) servant au préusinage précède la première plaquette de coupe (5) avec une avance d'environ 120°.

19. Un outil selon l'une des revendications 11 à 18, **caractérisé en ce qu'**une sixième plaquette de coupe (41) servant au préusinage se trouve en face de la première plaquette de coupe (5).

20. Un outil selon l'une des revendications précédentes 1 à 19, **caractérisé en ce que** les plaquettes de coupe peuvent être arrangées par paires, l'une en face de l'autre.

21. Un outil selon l'une des revendications 1 à 20, **caractérisé en ce qu'**une barre de guidage est associée à au moins une des plaquettes de coupe.

22. Un outil selon l'une des revendications précédentes 11 à 21, **caractérisé en ce que**, si l'on regarde dans la direction de rotation de l'outil, la barre de guidage suit la plaquette de coupe associée avec un retard d'environ 20°.

23. Un outil selon l'une des revendications précédentes 11 à 22, **caractérisé en ce qu'**une barre de guidage est associée à chaque plaquette de coupe.

24. Un outil selon l'une des revendications précédentes 11 à 23, **caractérisé en ce que** les barres de guidage sont arrangées par paires, l'une en face de l'autre.

25. Un outil selon l'une des revendications précédentes, **caractérisé en ce que**, si l'on regarde dans la direction d'avance de l'outil, la première plaquette de coupe (5) précède la barre de guidage associée (13) avec une avance d'environ 0,20 mm à 0,25 mm.

26. Un outil selon l'une des revendications précédentes, **caractérisé en ce que**, si l'on regarde dans la direction d'avance de l'outil, le deuxième tranchant (27) précède la barre de guidage associée avec une avance d'environ 0,50 mm.

27. Un outil selon l'une des revendications précédentes, **caractérisé en ce que** la deuxième plaquette de coupe (7) s'étend de 12 µm à 15 µm au-dessous de la surface de la barre de guidage associée dans une direction radiale.

28. Un outil selon l'une des revendications précédentes, **caractérisé en ce que** la première plaquette de coupe (5) s'étend de 9 µm à 12 µm au-dessus de la surface extérieure de la barre de guidage associée (13).

29. Un outil selon l'une des revendications précédentes, **caractérisé en ce qu'**une alimentation en caloporteurs et/ou lubrifiants est prévue.

30. Un outil selon l'une des revendications précédentes, **caractérisé en ce que** le refroidissement au moins des plaquettes de coupe servant à l'usinage précis peut être conçu de telle manière que les dernières, particulièrement leurs tranchants actifs, atteignent pendant l'usinage de surfaces de pièces à usiner une température au-dessous de 600°C, préférablement comprise entre 400°C et 600°C, particulièrement d'environ 450°C à 550°C.

31. Un outil selon la revendication 29, **caractérisé en ce que** le refroidissement peut être conçu de telle manière que la température de la plaquette de coupe et au moins de son tranchant actif, respectivement, ne dépasse pas environ 500°C.

32. Utilisation d'un outil selon l'une des revendications 1 à 31 pour l'usinage de pièces en matériaux de moulage, particulièrement en fonte grise et/ou en acier.
